# EUROPÄISCHE PATENTSCHRIFT

(11) **EP 2 851 109 B1**
(45) Veröffentlichungstag und Bekanntmachung des Hinweises auf die Patenterteilung: **12.02.2020**
(21) Anmeldenummer: 14179232.5
(22) Anmeldetag: 31.07.2014
(51) Int. Cl.: B01D 45/12, B01D 50/00, B01D 46/00

(54) **Vorrichtung zum Abscheiden von Schwebstoffen aus Luft**
Device for separating airborne particles from air
Dispositif destiné à séparer des matières en suspension de l'air

(30) Priorität: 26.08.2013 DE 102013014028
(43) Veröffentlichungstag der Anmeldung: 25.03.2015
(73) Patentinhaber: AFC Air Filtration & Containment GmbH, 76316 Malsch (DE)
(72) Erfinder: Mohari, Stefan Arpad, 76133 Karlsruhe (DE); Sadeghi, Ali Mohammad, 76448 Durmersheim (DE)
(74) Vertreter: Patentanwälte Bregenzer und Reule Partnerschaftsgesellschaft mbB

(56) Entgegenhaltungen:
- DE-A1- 4 340 292
- DE-U1-202011 002 037
- GB-A- 1 541 802
- GB-A- 2 377 656
- US-A- 4 459 140
- US-A1- 2008 016 830

## Beschreibung

Die Erfindung betrifft eine Vorrichtung zum Abscheiden von Schwebstoffen aus Luft gemäß Oberbegriff des Anspruchs 1.

Bekannte Vorrichtungen dieser Art (vgl. zum Beispiel GB 2 377 656 A, DE 43 40 292 A1, DE 20 2011 002 037 U1) weisen einen Zyklonabscheider auf, in dessen Abscheidebehälter tangential im Abstand zu seiner vertikal verlaufenden Längsachse über einen Lufteinlass mit Schwebstoffen verunreinigte Luft eingeleitet wird. Die in der Luft enthaltenen Schwebstoffe werden durch die Fliehkraft an die Wand des Abscheidebehälters geschleudert und abgebremst, so dass sie sich aus der Strömung lösen und nach unten in einen Auffangbehälter fallen. Die somit vorgereinigte Luft wird über ein Ableitrohr zu einem Luftauslass abgeleitet, das sich oben an den Abscheidebehälter anschließt. Im Ableitrohr kann zur weiteren Reinigung der Luft ein Filter angeordnet sein, so dass der Abscheidebehälter lediglich der Abscheidung größerer Schwebstoffpartikel dient, während die endgültige Reinigung der Luft im Filter erfolgt. Mit der Zeit setzt sich der Filter mit Schwebstoffen zu, so dass er gegen einen neuen Filter ausgetauscht werden muss. Zu diesem Zweck wird das Ableitrohr geöffnet, und der verschmutzte Filter wird nach oben herausgezogen. Dabei können Schwebstoffe in die Umgebung gelangen. Auch beim Entleeren des Auffangbehälters können Schwebstoffe in die Umgebung gelangen, wenn der Auffangbehälter vom Abscheidebehälter entfernt wird.

Aus der GB 1 541 802 A und der US 4,459,140 A ist jeweils eine Abscheidevorrichtung bekannt, deren Filter mittels Kraftbeaufschlagung durch einen neuen Filter aus dem Ableitrohr herausgeschoben werden können, wenn sie ausgetauscht werden müssen. Gemäß GB 1 541 802 A ist zum Auffangen des Filters ein außen an einem Gehäuse befestigter Auffangsack vorgesehen.

Es ist daher Aufgabe der Erfindung, eine Vorrichtung der eingangs genannten Art derart weiterzubilden, dass eine Belastung der Umgebung mit Schwebstoffen verringert wird.

Diese Aufgabe wird erfindungsgemäß durch eine Vorrichtung mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, die Schwebstoffe, die sich im Auffangbehälter abgelagert haben, aus diesem entnehmen zu können, ohne den Zyklonabscheider öffnen zu müssen. Es wird lediglich der einen Auffangsack für die Schwebstoffe bildende Endabschnitt des Endlosschlauchs aus dem Auffangbehälter herausgezogen. Anschließend wird der Endlosschlauch oberhalb der aufgenommenen Schwebstoffe beispielsweise durch Verschweißen oder durch eine Verschlussklammer verschlossen, und der die Schwebstoffe enthaltende Endbereich wird abgetrennt und vorzugsweise vor dem Abtrennen ebenfalls durch Verschweißen, Anbringen einer Klammer oder andere geeignete Maßnahmen verschlossen.

Der vorteilhaften Weiterbildung gemäß Anspruch 2 liegt der Gedanke zugrunde, den verunreinigten Filter nicht nach oben aus dem Ableitrohr herauszuziehen, sondern nach unten über den Abscheidebehälter in den Auffangbehälter fallen zu lassen, in dem sich ohnehin schon Schwebstoffe angesammelt haben, so dass der verunreinigte Filter zusammen mit den im Auffangbehälter befindlichen Ablagerungen entsorgt werden kann. Dabei kann der verunreinigte Filter auf einfache Weise aus dem Ableitrohr nach unten herausgeschoben werden, indem er mittels des neuen Filters bei dessen Einführen in das Ableitrohr mit Kraft beaufschlagt wird, so dass ein verunreinigter Filter in den Endlosschlauch fällt und das durch Schwebstoffe verunreinigte Innere des Zyklonabscheiders weder beim Filterwechsel noch beim Leeren des Auffangbehälters mit der Umgebung in Kontakt kommt.

Zweckmäßig wird der mindestens eine Filter mittels eines Reibschlusses an einer Innenseite des Ableitrohrs gehalten. Weitere Befestigungsmittel sind dann nicht notwendig, und ein Hineinschieben eines verunreinigten Filters in den Ableitbehälter und den Auffangbehälter erfolgt einfach durch Überwindung der Reibungskräfte. Diese können vorteilhaft durch umlaufende Dichtungen aufgebracht werden. Dabei wird bevorzugt, dass der mindestens eine Filter zwei an der Außenseite seines Außenmantels umlaufend angeordnete, an der Innenseite des Ableitrohrs anliegende Dichtungen aufweist, die in einem Abstand zueinander angeordnet sind, der mindestens der Hälfte der Höhe, vorzugsweise mindestens zwei Drittel der Höhe des Außenmantels entspricht. Dies hat den Vorteil, dass die umlaufenden Dichtungen zum einen den Filter über einen Großteil seiner Höhe im Ableitrohr führen und dass zum anderen über einen Großteil des vom Filter beim Hineinschieben in den Abscheidebehälter zurückgelegten Wegs zumindest mittels der im Abstand zum Abscheidebehälter angeordneten Dichtung ein Luftaustausch zwischen dem kontaminierten Innenraum des Zyklonabscheiders und der Umgebung verhindert wird. Wenn sich beide Dichtungen außerhalb des Ableitrohrs befinden, ist in der Regel bereits ein neuer Filter in das Ableitrohr eingeführt, dessen Dichtungen dann einen Luftaustausch zwischen dem Inneren des Zyklonabscheiders und der Umgebung verhindern. Dabei ist es möglich, auch mehr als die zwei vorgenannten Dichtungen pro Filter vorzusehen. Zweckmäßig weisen die Dichtungen eine Anzahl rings umlaufender, radial abstehender elastisch biegsamer Lamellen auf. Im Vergleich zu einem einzelnen umlaufenden Dichtring haben die Lamellen den Vorteil, dass ein zwischen der Dichtung und dem Ableitrohr eingeklemmter Staubpartikel meist lediglich die Dichtwirkung einer der Lamellen, nicht aber der gesamten Dichtung verringert.

Zweckmäßig ragt das Ableitungsrohr in den Abscheidebehälter und ist bezüglich diesem entlang der Längsachse verschieblich gelagert. Die Tiefe, mit der das Ableitrohr in den Abscheidebehälter eintaucht, kann dann in Abhängigkeit der Leistung des Zyklonabscheiders variiert werden. Zudem kann im Auffangbehälter in einer vorbestimmten Höhe über dessen unterem Ende ein Sensor zur Bestimmung der Konzentration von Schwebstoffen angeordnet sein. Erreicht die Konzentration der Schwebstoffe in diesem Bereich einen vorbestimmten Grenzwert, so ist dies ein Zeichen dafür, dass der Auffangbehälter geleert werden muss. Die Bauteile des Zyklonabscheiders können zumindest teilweise mittels Flanschen und Spannringen miteinander verbunden sein. Dies erleichtert ein Zerlegen des Zyklonabscheiders zum Zwecke der Reinigung. Der Zyklonabscheider kann zudem auf einem Fahrgestell ruhen, so dass er leicht transportiert werden kann.

Es ist möglich, dass im Ableitrohr lediglich ein Filter angeordnet ist. Es wird jedoch bevorzugt, das im Ableitrohr in axialer Richtung hintereinander mindestens zwei baugleiche Filter angeordnet sind, wobei die Abdeckplatte eines ersten Filters im Abstand zur ersten Stirnfläche eines zweiten Filters angeordnet ist, der auf der dem Abscheidebehälter abgewandten Seite des ersten Filters diesem benachbart angeordnet ist. Ein Filterwechsel erfolgt dann dadurch, dass der unterste Filter aus dem Ableitrohr herausgedrückt wird, indem auf den obersten Filter ein neuer Filter aufgesetzt und nach unten in das Ableitrohr geschoben wird. Der zweitunterste Filter nimmt dann die Position des bisher untersten Filters ein.

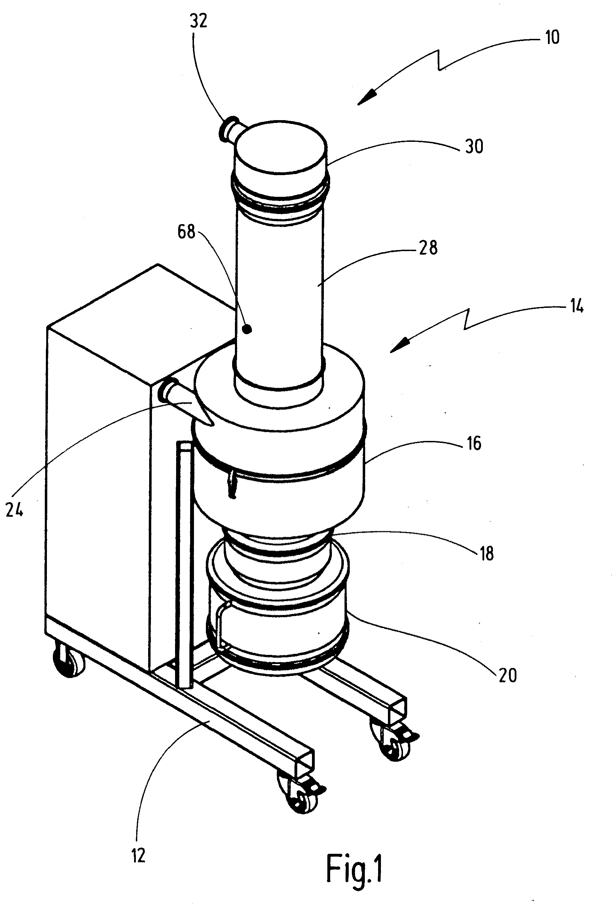

Im Folgenden wird die Erfindung anhand eines in der Zeichnung schematisch dargestellten Ausführungsbeispiels näher erläutert. Es zeigen
- Fig. 1: eine Vorrichtung zum Abscheiden von Schwebstoffen in perspektivischer Ansicht;
- Fig. 2a, b, c: den Zyklonabscheider der Vorrichtung gemäß Fig. 1 in zwei Seitenansichten sowie in einem Schnitt entlang der Linie A-A und
- Fig. 3: eine Explosionsdarstellung des Zyklonabscheiders gemäß Fig. 2a.

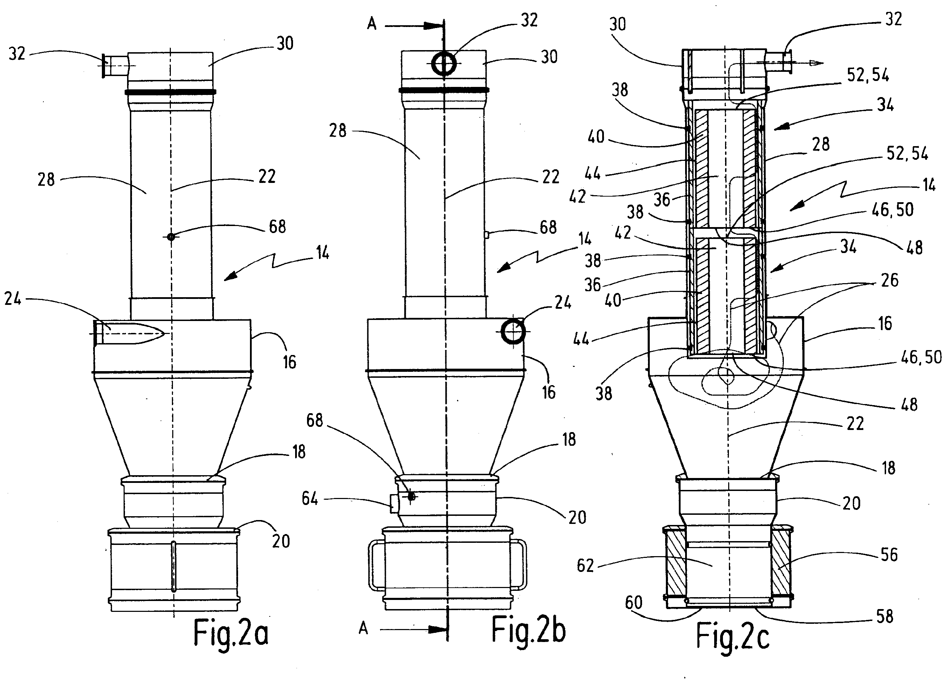

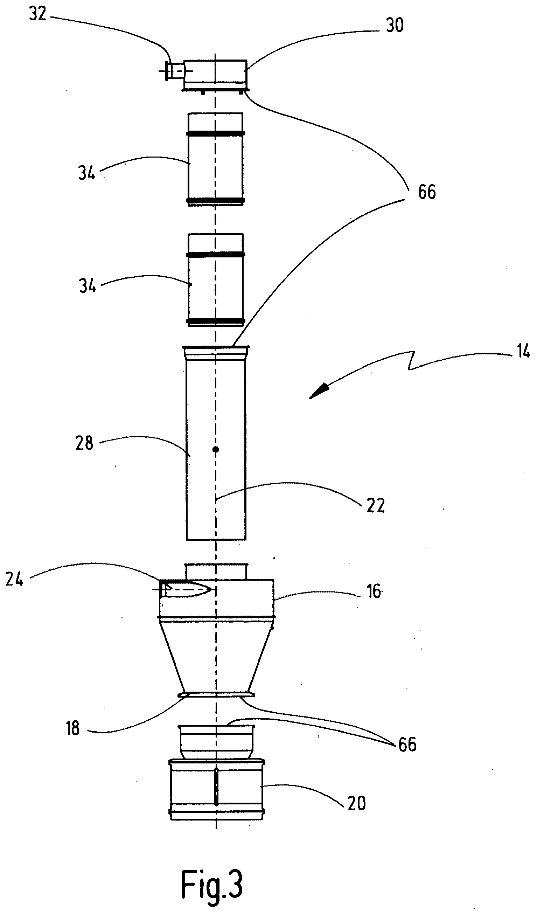

Die in der Zeichnung dargestellte Vorrichtung 10 dient dem Abscheiden von Schwebstoffen aus verunreinigter Luft und weist einen auf einem Fahrgestell 12 ruhenden Zyklonabscheider 14 auf, der in Fig. 2, 3 im Detail dargestellt ist. Der Zyklonabscheider 14 weist einen Abscheidebehälter 16 auf, der an seinem unteren Ende 18 in einen Auffangbehälter 20 mündet. Im Abstand zu einer vertikalen Längsachse 22 ist ein Lufteinlass 24 angeordnet, über den verunreinigte Luft in tangentialer Richtung in den Abscheidebehälter 16 eingeblasen wird, so dass sie sich entlang der Wand des Abscheidebehälters 16 im wesentlichen im Kreis bewegt, wie in Fig. 2c durch die Linie 26 angedeutet. Nach unten hin verjüngt sich der Abscheidebehälter 16 kegelförmig, so dass dort die Drehgeschwindigkeit der Luft zunimmt und die Schwebstoffe gegen die Wand des Abscheidebehälters 16 geschleudert werden, so dass sie sich dort abscheiden und in den Auffangbehälter 20 fallen.

Eine Ableitung der solchermaßen vorgereinigten Luft erfolgt über ein oben in den Abscheidebehälter 16 mündendes Ableitrohr 28, das wiederum in einen in einer Abdeckhaube 30 angeordneten Luftauslass 32 mündet. Das Ableitrohr 28 ist zylinderförmig mit der Längsachse 22 als Mittelachse und ragt in den Abscheidebehälter 16 hinein. Es ist zudem entlang der Längsachse 22 bezüglich des Abscheidebehälters 16 beweglich, so dass seine Eindringtiefe in den Abscheidebehälter 16 variiert werden kann. Im Ableitrohr 28 sind in axialer Richtung aufeinanderfolgend zwei baugleiche Filter 34 angeordnet, von denen jeder einen zylindrischen, starren und luftundurchlässigen Außenmantel 36 aufweist, der nahe seiner Enden jeweils mit einer umlaufenden Dichtung 38 versehen ist. Die Dichtungen 38 bestehen im gezeigten Ausführungsbeispiel aus fünf im Abstand und parallel zueinander verlaufenden Lamellen, die jeweils an einer Innenfläche des Ableitrohrs 28 anliegen. Die Lamellen sind elastisch verformt, so dass ein Reibschluss zwischen ihnen und dem Ableitrohr 28 besteht, der ausreichend ist, die Filter 34 im Ableitrohr 28 zu halten.

Die Filter 34 weisen zudem ein Filtermedium 40 in Form eines Hohlzylinders auf, das einen mittigen Hohlraum 42 rings umschließt und das unter Ausbildung eines Spalts 44 im Abstand zum Außenmantel 36 angeordnet ist. Das Filtermedium 40 steht auf einer kreisringförmigen Bodenplatte 46 auf, die fest mit dem Außenmantel 36 verbunden ist und deren zentrale Öffnung 48 mit dem mittigen Hohlraum 42 kommuniziert. Auf der der durch die Bodenplatte 46 gebildeten ersten Stirnseite 50 des Filtermediums 40 abgewandten zweiten Stirnseite 52 wird das Filtermedium 40 durch eine den mittigen Hohlraum 42 verschließende, luftdichte Abdeckplatte 54 abgedeckt, die im Abstand zur Bodenplatte 46 des oberen Filters 34 angeordnet ist. Vom Abscheidebehälter 16 in das Ableitrohr 28 geleitete Luft strömt somit durch die Öffnung 48 in der Bodenplatte 46 des unteren Filters 34 in dessen Hohlraum 42, dringt durch sein Filtermedium 40 in den Spalt 44 und strömt von dort durch die Öffnung 48 der Bodenplatte 46 des oberen Filters 34 in dessen Hohlraum 42. Von dort aus durchdringt sie dessen Filtermedium 40 und wird über seinen Spalt 44 in die Abdeckhaube 30 geleitet, aus der sie über den Luftauslass 32 aus dem Zyklonabscheider 14 abgesaugt wird.

Im Auffangbehälter 20 ist ein zusammengefalteter Endlosschlauch 56 angeordnet, der aus einer unterseitigen Öffnung 58 des Auffangbehälters 20 herausgezogen werden kann. Der Endlosschlauch 56 ist an seinem unteren Ende verschlossen und bildet einen Boden 60 eines Auffangsacks 62, in den die abgeschiedenen Schwebstoffe fallen. Ist der Auffangsack 62 weitgehend mit abgeschiedenen Schwebstoffen gefüllt, was durch einen im oberen Bereich des Auffangbehälters 20 angeordneten Sensor 64 angezeigt wird, so wird der das untere Ende des Endlosschlauchs 56 bildende Auffangsack 62 aus dem Auffangbehälter 20 herausgezogen, nach oben hin verschlossen und abgetrennt. Gleichzeitig wird unter Bildung eines neuen Auffangsacks ein neuer Boden des Endlosschlauchs 56 gebildet.

Der Innendurchmesser des Abscheidebehälters 16 sowie der Innendurchmesser des Auffangbehälters 20 und der Innendurchmesser des Auffangsacks 62 sind jeweils größer als der durch den Durchmesser der Dichtungen 38 definierte Außendurchmesser der Filter 34, so dass diese unter Überwindung der Reibungskräfte zwischen ihren Dichtungen 38 und dem Ableitrohr 28 nach unten aus dem Ableitrohr 28 herausgeschoben werden können, indem die Abdeckhaube 30 entfernt und ein neuer Filter auf den oberen Filter 34 aufgesetzt und nach unten gedrückt wird. Der untere Filter 34 fällt dann aus dem Ableitrohr 28 durch den Abscheidebehälter 16 in den Auffangbehälter 20 und in den Auffangsack 62 und kann ebenso wie die im Auffangsack 62 enthaltenen Schwebstoffe unter luftdichtem Verschließen des Auffangsacks 62 entsorgt werden. Die Dichtungen 38 sorgen durch ihre Verteilung über einen Großteil der Höhe des Ableitrohrs 28 auch beim Filterwechsel für einen weitgehend hermetischen Einschluss der abgeschiedenen Schwebstoffe.

Um den Zyklonabscheider 16 auf einfache Weise zu Reinigungszwecken zerlegen zu können, ist der Abscheidebehälter 16 mit dem Auffangbehälter 20 ebenso über einen Flansch 66 verbunden wie das Ableitrohr 28 mit der Abdeckhaube 30. An jedem der Flansche ist zudem ein Spannring angeordnet, der für eine feste und dennoch leicht lösbare Verbindung sorgt. Desweiteren sind an den mit dem Bezugszeichen 68 versehenen Stellen Drucksensoren in den Zyklonabscheider 14 eingeführt, so dass die Drücke und deren Differenz an den unterschiedlichen Stellen gemessen werden können. Ein weiterer Drucksensor kann im Bereich der Abdeckhaube 30 in den Zyklonabscheider 14 eingeführt sein.

Zusammenfassend ist folgendes festzuhalten: Die Erfindung betrifft eine Vorrichtung 10 zum Abscheiden von Schwebstoffen aus Luft mit einem Zyklonabscheider 14, der einen Abscheidebehälter 16, einen tangential bezüglich einer vertikal verlaufenden Längsachse 22 im Abstand zu dieser ausgerichteten, in den Abscheidebehälter 16 mündenden Lufteinlass 24, einen Auffangbehälter 20, in den der Abscheidebehälter 16 an seinem unteren Ende 18 mündet, und ein in einen Luftauslass 32 mündendes, oben an den Abscheidebehälter 16 anschließendes und mit diesem kommunizierendes Ableitrohr 28 aufweist, und mit mindestens einem im Ableitrohr 28 angeordneten Filter 34 für die Schwebstoffe. Einfindungsgemäß ist vorgesehen, dass der mindestens eine Filter 34 einen starren luftdichten Außenmantel 36 sowie ein im Außenmantel 36 im Abstand zu diesem angeordnetes, einen mittigen Hohlraum 42 umschließendes Filtermedium 40 aufweist, welches an seiner dem Abscheidebehälter 16 zugewandten ersten Stirnseite 50 mit diesem über eine Öffnung 48 kommuniziert und an seiner dem Abscheidebehälter 16 abgewandten zweiten Stirnseite 52 mittels einer luftdichten Abdeckplatte 54 verschlossen ist, dass der mindestens eine Filter 34 im Ableitrohr 28 in Richtung zum Abscheidebehälter 16 verschiebbar ist und dass der Abscheidebehälter 16 und der Auffangbehälter 20 jeweils einen Innendurchmesser aufweisen, der größer ist als der Außendurchmesser des mindestens einen Filters 34.

## Patentansprüche

1. Vorrichtung zum Abscheiden von Schwebstoffen aus Luft mit einem Zyklonabscheider (14), der einen Abscheidebehälter (16), einen tangential bezüglich einer vertikal verlaufenden Längsachse (22) im Abstand zu dieser ausgerichteten, in den Abscheidebehälter (16) mündenden Lufteinlass (24), einen Auffangbehälter (20), in den der Abscheidebehälter (16) an seinem unteren Ende (18) mündet, und ein in einen Luftauslass (32) mündendes, oben an den Abscheidebehälter (16) anschließendes und mit diesem kommunizierendes Ableitrohr (28) aufweist, und mit mindestens einem im Ableitrohr (28) angeordneten Filter (34) für die Schwebstoffe, **dadurch gekennzeichnet, dass** im Auffangbehälter (20) ein gefalteter, aus einer unterseitigen Öffnung (58) des Auffangbehälters (20) herausziehbarer Endlosschlauch (56) aus Kunststoff angeordnet ist, dessen eines Ende verschlossen ist und einen Boden (60) eines Auffangsacks (62) für die Schwebstoffe und/oder den mindestens einen Filter (34) bildet.

2. Vorrichtung nach Anspruch 1, **dadurch gekennzeichnet, dass** der mindestens eine Filter (34) einen starren luftdichten Außenmantel (36) sowie ein im Außenmantel (36) im Abstand zu diesem angeordnetes, einen mittigen Hohlraum (42) umschließendes Filtermedium (40) aufweist, welches an seiner dem Abscheidebehälter (16) zugewandten ersten Stirnseite (50) mit diesem über eine Öffnung (48) kommuniziert und an seiner dem Abscheidebehälter (16) abgewandten zweiten Stirnseite (52) mittels einer luftdichten Abdeckplatte (54) verschlossen ist, dass der mindestens eine Filter (34) im Ableitrohr (28) in Richtung zum Abscheidebehälter (16) verschiebbar ist und dass der Abscheidebehälter (16) und der Auffangbehälter (20) jeweils einen Innendurchmesser aufweisen, der größer ist als der Außendurchmesser des mindestens einen Filters (34).

3. Vorrichtung nach einem der vorangehenden Ansprüche, **dadurch gekennzeichnet, dass** der mindestens eine Filter (34) mittels eines Reibschlusses an einer Innenseite des Ableitrohrs (28) gehalten wird.

4. Vorrichtung nach einem der vorangehenden Ansprüche, **dadurch gekennzeichnet, dass** der mindestens eine Filter (34) zwei an der Außenseite seines Außenmantels (36) umlaufend angeordnete, an der Innenseite des Ableitrohrs (28) anliegende Dichtungen (38) aufweist, die in einem Abstand zueinander angeordnet sind, der mindestens der Hälfte der Höhe, vorzugsweise mindestens zwei Drittel der Höhe des Außenmantels (36) entspricht.

5. Vorrichtung nach Anspruch 4, **dadurch gekennzeichnet, dass** jede der Dichtungen (38) eine Anzahl rings umlaufender, radial abstehender elastisch biegsamer Lamellen aufweist.

6. Vorrichtung nach einem der Ansprüche 4 oder 5 und nach Anspruch 3, **dadurch gekennzeichnet, dass** die Dichtungen (38) den Reibschluss bewirken.

7. Vorrichtung nach einem der vorangehenden Ansprüche, **dadurch gekennzeichnet, dass** das Ableitrohr (28) in den Abscheidebehälter ragt und bezüglich diesem entlang der Längsachse (22) verschiebbar gelagert ist.

8. Vorrichtung nach einem der vorangehenden Ansprüche, **dadurch gekennzeichnet, dass** im Ableitrohr (28) in axialer Richtung hintereinander mindestens zwei baugleiche Filter (34) angeordnet sind, wobei die Abdeckplatte (54) eines ersten Filters (34) im Abstand zur ersten Stirnseite (50) eines auf der dem Abscheidebehälter (16) abgewandten Seite des ersten Filters (34) benachbarten zweiten Filters (34) angeordnet ist.

9. Vorrichtung nach einem der vorangehenden Ansprüche, **dadurch gekennzeichnet, dass** im Auffangbehälter (20) in einer vorbestimmten Höhe über dessen unterem Ende ein Sensor (64) zur Bestimmung der Konzentration von Schwebstoffen angeordnet ist.

10. Vorrichtung nach einem der vorangehenden Ansprüche, **dadurch gekennzeichnet, dass** die Bauteile des Zyklonabscheiders (14) zumindest teilweise mittels Flanschen (66) und Spannringen miteinander verbunden sind.

11. Vorrichtung nach einem der vorangehenden Ansprüche, **dadurch gekennzeichnet, dass** der Zyklonabscheider (14) auf einem Fahrgestell (12) ruht.

## Claims

1. Device for separating suspended particles from air having a cyclone separator (14) which has a separation container (16), an air inlet (24) which is orientated tangentially with respect to a vertically extending longitudinal axis (22) with spacing therefrom and which opens in the separation container (16), a collection container (20) in which the separation container (16) opens at the lower end (18) thereof, and a discharge pipe (28) which opens in an air outlet (32) and which adjoins the separation container (16) at the top and which communicates therewith, and having at least one filter (34) for the suspended particles which is arranged in the discharge pipe (28), **characterised in that** in the collection container (20) there is arranged a folded continuous hose (56) of plastics material which can be pulled out of a lower-side opening (58) of the collection container (20) and one end of which is closed and forms a base (60) of a collection bag (62) for the suspended particles and/or the at least one filter (34).

2. Device according to claim 1, **characterised in that** the at least one filter (34) has a rigid air-tight outer cover (36) and a filter medium (40) which is arranged in the outer cover (36) with spacing therefrom and which surrounds a central hollow space (42) and which at the first end side (50) thereof facing the separation container (16) communicates therewith via an opening (48) and at the second end side (52) thereof facing away from the separation container (16) is closed by means of an air-tight covering plate (54), **in that** the at least one filter (34) in the discharge pipe (28) can be displaced in the direction towards the separation container (16) and **in that** the separation container (16) and the collection container (20) each have an inner diameter which is greater than the outer diameter of the at least one filter (34).

3. Device according to any one of the preceding claims, **characterised in that** the at least one filter (34) is retained on an inner side of the discharge pipe (28) by means of frictional engagement.

4. Device according to any one of the preceding claims, **characterised in that** the at least one filter (34) has two seals (38) which are arranged so as to extend at the outer side of the outer cover (36) thereof and which abut the inner side of the discharge pipe (28) and which are arranged with a spacing from each other which corresponds to at least half of the height, preferably at least two-thirds of the height of the outer cover (36).

5. Device according to claim 4, **characterised in that** each of the seals (38) has a number of resiliently flexible plates which extend all round the circumference and which protrude radially.

6. Device according to either claim 4 or claim 5 and according to claim 3, **characterised in that** the seals (38) bring about the frictional engagement.

7. Device according to any one of the preceding claims, **characterised in that** the discharge pipe (28) protrudes into the separation container and is supported so as to be able to be displaced relative thereto along the longitudinal axis (22) .

8. Device according to any one of the preceding claims, **characterised in that** at least two structurally identical filters (34) are arranged in the discharge pipe (28) in an axial direction one behind the other, wherein the covering plate (54) of a first filter (34) is arranged with spacing from the first end side (50) of a second filter (34) which is adjacent at the side of the first filter (34) facing away from the separation container (16).

9. Device according to any one of the preceding claims, **characterised in that** a sensor (64) for determining the concentration of suspended particles is arranged in the collection container (20) at a predetermined height above the lower end thereof.

10. Device according to any one of the preceding claims, **characterised in that** the components of the cyclone separator (14) are connected to each other at least partially by means of flanges (66) and clamping rings.

11. Device according to any one of the preceding claims, **characterised in that** the cyclone separator (14) rests on a chassis (12).

## Revendications

1. Dispositif pour séparer des matières en suspension de l'air, comprenant un séparateur à cyclone (14) qui présente un récipient de séparation (16), une entrée d'air (24) qui est orientée tangentiellement à un axe longitudinal (22) s'étendant verticalement, à distance de ce dernier, et qui débouche dans le récipient de séparation (16), un récipient collecteur (20) dans lequel le récipient de séparation (16) débouche à son extrémité inférieure (18), un tube d'évacuation (28) qui se raccorde au sommet du récipient de séparation (16) en communiquant avec ce dernier et qui débouche dans une sortie d'air (32), et au moins un filtre (34) disposé dans le tube d'évacuation (28) pour les matières en suspension,
**caractérisé en ce que** dans le récipient collecteur (20) est disposé un tuyau sans fin plié (56) en matière plastique qui peut être retiré par une ouverture inférieure (58) du récipient collecteur (20) et dont une extrémité est fermée et forme un fond (60) d'un sac collecteur (62) pour les matières en suspension et/ou forme ledit au moins un filtre (34).

2. Dispositif selon la revendication 1, **caractérisé en ce que** ledit au moins un filtre (34) présente une enveloppe extérieure rigide étanche à l'air (36) ainsi qu'un milieu filtrant (40) disposé dans l'enveloppe extérieure (36) à distance de celle-ci, qui entoure une cavité centrale (42) et communique avec le récipient de séparation (16) sur sa première face frontale (50) tournée vers celui-ci par une ouverture (48) et est fermé au moyen d'une plaque de recouvrement étanche à l'air (54) sur sa seconde face frontale (52) opposée au récipient de séparation (16), que ledit au moins un filtre (34) peut être déplacé dans le tube d'évacuation (28) en direction du récipient de séparation (16) et que le récipient de séparation (16) et le récipient collecteur (20) présentent chacun un diamètre intérieur qui est supérieur au diamètre extérieur dudit au moins un filtre (34).

3. Dispositif selon l'une des revendications précédentes, **caractérisé en ce que** ledit au moins un filtre (34) est maintenu au moyen d'une liaison par friction sur le côté intérieur du tube d'évacuation (28).

4. Dispositif selon l'une des revendications précédentes, **caractérisé en ce que** ledit au moins un filtre (34) présente deux joints (38) disposés circonférentiellement sur le côté extérieur de son enveloppe extérieure (36), s'appuyant contre le côté intérieur du tube d'évacuation (28), qui sont disposés à une distance l'un de l'autre qui correspond à au moins la moitié, de préférence à au moins deux tiers, de la hauteur de l'enveloppe extérieure (36).

5. Dispositif selon la revendication 4, **caractérisé en ce que** chacun des joints (38) présente un certain nombre de lamelles circonférentielles élastiquement flexibles qui font saillie radialement.

6. Dispositif selon l'une des revendications 4 ou 5 et selon la revendication 3, **caractérisé en ce que** les joints (38) produisent la liaison par friction.

7. Dispositif selon l'une des revendications précédentes, **caractérisé en ce que** le tube d'évacuation (28) fait saillie dans le récipient de séparation et est monté déplaçable par rapport à celui-ci le long de l'axe longitudinal (22).

8. Dispositif selon l'une des revendications précédentes, **caractérisé en ce qu'**au moins deux filtres identiques (34) sont disposés l'un derrière l'autre dans la direction axiale dans le tube d'évacuation (28), la plaque de recouvrement (54) d'un premier filtre (34) étant disposée à distance de la première face frontale (50) d'un second filtre (34) adjacent au côté du premier filtre (34) opposé au récipient de séparation (16).

9. Dispositif selon l'une des revendications précédentes, **caractérisé en ce qu'**un capteur (64) servant à déterminer la concentration de matières en suspension est disposé dans le récipient collecteur (20) à une hauteur prédéterminée au-dessus de son extrémité inférieure.

10. Dispositif selon l'une des revendications précédentes, **caractérisé en ce que** les composants du séparateur à cyclone (14) sont au moins partiellement reliés entre eux au moyen de brides (66) et de colliers de serrage.

11. Dispositif selon l'une des revendications précédentes, **caractérisé en ce que** le séparateur à cyclone (14) repose sur un chariot (12).
